(19)

**Europäisches Patentamt**
**European Patent Office**
**Office européen des brevets**

(11) **EP 3 932 531 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **20183838.0**

(22) Anmeldetag: **02.07.2020**

(51) Internationale Patentklassifikation (IPC):
**G01K 17/08** (2006.01) **B01J 19/00** (2006.01)
**B01F 25/313** (2022.01) **B01F 25/431** (2022.01)
**B01F 35/21** (2022.01) **B01F 35/92** (2022.01)
**G01N 25/48** (2006.01)

(52) Gemeinsame Patentklassifikation (CPC):
**G01K 17/08; B01F 25/3131; B01F 25/43161; B01F 35/2115; B01F 35/92; B01J 19/0093; G01N 25/4886;** B01J 2219/00873; B01J 2219/00889

(54) **KONTINUIERLICHES REAKTIONSKALORIMETER**

CONTINUOUS REACTION CALORIMETER

CALORIMÈTRE À RÉACTION CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.01.2022 Patentblatt 2022/01**

(73) Patentinhaber: **Fluitec Invest AG**
**8413 Neftenbach (CH)**

(72) Erfinder:
• **Georg, Alain**
**8413 Neftenbach (CH)**
• **Moser, Marlies**
**8478 Thalheim an der Thur (CH)**

• **Merkel, Norbert**
**78234 Engen (DE)**
• **Rosasco, Esteban**
**8353 Elgg (CH)**
• **Andreoli, Silvano**
**8413 Neftenbach (CH)**
• **Hodler, Micha**
**8247 Flurlingen (CH)**

(74) Vertreter: **Clerc, Natalia**
**Isler & Pedrazzini AG**
**Giesshübelstrasse 45**
**Postfach 1772**
**8027 Zürich (CH)**

(56) Entgegenhaltungen:
**EP-B1- 2 870 444   CH-B1- 702 311**

**Beschreibung**

TECHNISCHES GEBIET

Die vorliegende Erfindung betrifft ein kontinuierliches Reaktionskalorimeter, insbesondere zur Bestimmung der spezifischen Reaktionswärme (Qr) bzw. der spezifischen Reaktionsenthalpie $\Delta H_{m,R}$.

STAND DER TECHNIK

Die Reaktionskalorimetrie ist die Methode zur thermoanalytischen Untersuchung erwünschter chemischer Reaktionen sowie deren Nebenreaktionen. Reaktionskalorimeter sind für Chemieanwendungen optimierte Kalorimeter. Sie werden insbesondere in der Verfahrensentwicklung verwendet, um bei einer Reaktion entstehende Wärme unter Berücksichtigung des zeitlichen Verlaufes zu messen. Die erhaltenen Daten werden insbesondere für die sicherheitstechnische Beurteilung des Prozesses und die Auslegung der Systeme verwendet.

Unter den Reaktionskalorimetern wird zwischen kontinuierlichen und Batch (Feed-Batch) Kalorimetern unterschieden.

Es gibt zahlreiche kommerzielle Reaktionskalorimeter auf dem Markt. Die meisten basieren auf einem gerührten Behälter, welcher im Batch oder im Feedbatch-Verfahren betrieben wird. Typische Produkte sind zum Beispiel folgende Systeme:

-    das LabKit™-rcf -Wärmefluss-Reaktionskalorimeter,
-    das Wärmeflusskalorimeter OptiMax HFCal,
-    das Reaktionskalorimeter RC1mx und
-    das Kalorimeter nach Calvet.

Da chemische Reaktionen üblicherweise mit einem Energieumsatz verbunden sind und die umgesetzte Wärmemenge in einer Beziehung zur Reaktionsgeschwindigkeit und der Konzentration des Reaktionsprodukts steht, sind thermische Analysen ein bequemes und gut brauchbares Mittel, um über die Reaktionskinetik der verschiedensten Reaktionen Aufschluss zu erhalten. Diese thermischen Analysen werden bei Batch- oder Feedbatch-Kalorimetern in zwei grosse Gruppen eingeteilt und zwar in die klassische adiabatische Kalorimetrie und in die Wärmefluss- oder Wärmebilanzkalorimetrie. Eine weitere Gruppe umfasst Reaktionskalorimeter in Form eines kapillaren Kalorimeters, wie dies in K. Wang: "Measuring enthalpy of fast exothermal reaction with micro-reactor-based capillary calorimeter", AICHE Journal, 14 December 2009 (2009-12-14), pages 1045-1052, XP055113368, ISSN: 0001-1541, DOI: 10.1002/aic.11792 beschrieben ist

Kontinuierliche Reaktionskalorimeter, insbesondere kontinuierliche Wärmefluss- oder Wärmebilanzkalorimeter, weisen vorzugsweise rechteckige oder runde Kanäle auf Kalorimeter sind beispielsweise auch in DE 2 332 135 C2, DD 248 872 A1, DE 44 05 267 C, EP 1 543 304 B1, EP 2 870 444 B1, US 2015/0139269 A1 und WO2011/066663 A1 offenbart.

Moderne Reaktionskalorimeter sind teilweise mit einer intelligenten Mess- und Regeltechnik ausgestattet, die es ermöglicht, die Reaktionsführung in allen wichtigen Parametern analog zum geplanten Verfahren nachzufahren. Reaktionskalorimeter werden vorzugsweise isotherm betrieben, wobei auch temperaturprogrammierte, adiabatische, polytrope und isoperibole Fahrweisen möglich sind.

Die Kenntnis der auftretenden Wärmeströme in chemischen Reaktionen stellt eine Schlüsselinformation für die erfolgreiche Auslegung und Entwicklung neuer Prozesse bzw. die Optimierung bestehender Prozesse dar. Für die Entwicklung von neuen, prozessbegleitenden und schnellen Prozessanalyseverfahren ist die Wärmeflussmessung deshalb ein attraktiver Lösungsansatz.

Thermodynamische Eigenschaften, wie beispielsweise die spezifische Reaktionswärme (Qr) werden für die Auslegung eines chemischen Prozesses benötigt und sind Voraussetzung für hohe Produktqualitäten sowie eine hohe Sicherheit der Anlage. Es ist bekannt, dass sich die in einem Batch-ähnlichen Wärmeflusskalorimeter (WFK) ermittelte Reaktionswärme stark von der tatsächlichen Reaktionswärme im kontinuierlichen Rohrreaktor unterscheiden kann.

Aus diesem Grund ist es sinnvoll, die Bestimmung der spezifischen Reaktionswärme direkt in dem gewählten Reaktionssystem, im kleineren und kontrollierten Massstab, durchzuführen.

Für die Durchführung schneller Reaktionsscreenings sind daher Untersuchungsmethoden notwendig, die einen hohen Informationsgehalt bei gleichzeitig kurzen Versuchszeiten gewährleisten. Eine leistungsfähige Prozessanalytik, die diese Anforderungen erfüllt, basiert auf der Verknüpfung von kontinuierlicher Mikro- oder Millireaktionstechnik mit kalorimetrischer Messtechnik.

Im Stand der Technik sind ferner kontinuierlich betriebene Reaktoren bekannt. Sie umfassen Mikroreaktoren, Leerrohre, Rohrschlangen oder Rührwerke mit einer Zuführung und einem Abfluss. Zudem sind statische Mischer und Mischer-Wärmetauscher bekannt, wie sie beispielsweise in EP 1 067 352 B1, WO 2008/141472 A1, EP 3 620 230 A1, EP 2 796 195 B1, EP 3 417 935 B1, EP 2 796 195 B1, EP 2 286 904 B1, EP 3 081 285 B1 und EP 2 113 732 A1 beschrieben sind.

Eine besondere Art von Reaktoren sind die Contiplant-Reaktoren, wie sie in CH 702 311 B1 beschrieben sind. Diese Reaktoren in Form von Doppelmantel-Mischer-Wärmetauschern sind für den Laborbetrieb geeignet.

DARSTELLUNG DER ERFINDUNG

Es ist deshalb eine Aufgabe der Erfindung, ein kontinuierliches Reaktionskalorimeter zu schaffen, das während einer Reaktion auftretende Wärmeströme optimal messen kann und das eine Skalierung der erhaltenen Ergebnisse auf grössere Reaktionssysteme erlaubt.

Diese Aufgabe wird durch ein kontinuierliches Reaktionskalorimeter mit den Merkmalen des Patentanspruchs 1 sowie durch ein Verfahren gemäss Patentanspruch 15 gelöst.

Das erfindungsgemässe kontinuierliche Reaktionskalorimeter weist einen ersten Feedstrom-Zulauf und einen Auslauf für ein Produkt, eine zwischen dem ersten Zulauf und dem Auslauf angeordnete Rohrzone und mehrere entlang der Länge angeordneten Temperaturmessstellen auf. Das Reaktionskalorimeter weist im Bereich der Rohrzone einen Mischer-Wärmetauscher mit einer statischen Mischergeometrie auf. Der Mischer-Wärmetauscher weist einen Innenraum zur Aufnahme der Mischergeometrie auf, wobei der Innenraum einen Innendurchmesser von 4 bis 16 mm aufweist. Mindestens fünf Temperaturmessstellen sind auf einer Länge von 500 mm entlang des Mischer-Wärmetauschers angeordnet und das Reaktionskalorimeter weist mindestens einen zweiten Feedstrom-Zulauf auf.

Das Kalorimeter und auch der Mischer-Wärmetauscher können selbstverständlich länger als 500 mm ausgebildet sein. Es können auch mehr als fünf Temperaturmessstellen über eine Länge von mehr als 500 mm verteilt angeordnet sein.

In einer alternativen Ausführungsform weist das erfindungsgemässe kontinuierliche Reaktionskalorimeter einen ersten Feedstrom-Zulauf und einen Auslauf für ein Produkt, eine zwischen dem ersten Zulauf und dem Auslauf angeordnete Rohrzone und mehrere entlang der Länge angeordneten Temperaturmessstellen auf. Das Reaktionskalorimeter weist im Bereich der Rohrzone einen Mischer-Wärmetauscher mit einer statischen Mischergeometrie auf. Der Mischer-Wärmetauscher weist einen Innenraum zur Aufnahme der Mischergeometrie auf. Das Reaktionskalorimeter weist mindestens einen zweiten Feedstrom-Zulauf auf. Das kontinuierliche Reaktionskalorimeter weist eine stirnseitige eingangsseitige Flanschzone und eine stirnseitige ausgangsseitige Flanschzone auf, wobei der erste und der mindestens eine zweite Feedstrom-Zulauf in der eingangsseitigen Flanschzone angeordnet sind und wobei diese eingangsseitige Flanschzone thermisch isoliert ist. Die thermische Isolation ist je nach Ausführungsform innen und/oder aussen angeordnet. Je nach Ausführungsform ist auch die ausgangsseitige Flanschzone isoliert. Dies insbesondere dann vorteilhaft, wenn bei der Kalorimetrie die Wärmebilanz im Mantel verwendet wird.

Im erfindungsgemässen Verfahren zur Berechnung eines Wärmeübergangs in einem kontinuierlichen Reaktionskalorimeter wird entlang der thermisch isolierten Zone innerhalb des die statische Mischergeometrie aufweisenden Mischer-Wärmetauschers an mehreren entlang einer Längsmittelachse verteilt angeordneten Messstellen eine Temperatur gemessen, wobei alle gemessenen Messpunkte ausgewertet und zur Berechnung eines k-Werts berücksichtigt werden.

Diese Anordnungen und dieses Verfahren im Kleinen ermöglichen eine relativ genaue kalorimetrische Messung und erlaubt eine Skalierung auf grössere Systeme.

Weitere Merkmale der Erfindung sind aus den abhängigen Ansprüchen zu entnehmen. Dieser Inhalt ist hier durch Referenz in die Beschreibung aufgenommen.

Das erfindungsgemässe kontinuierliche Reaktionskalorimeter erfüllt vorzugsweise mindestens einige, vorzugsweise alle der folgenden Bedingungen bzw. Kriterien:

- Das kontinuierliche Reaktionskalorimeter erfasst die Temperaturen bzw. den Temperaturverlauf mit hoher Genauigkeit.
- Das kontinuierliche Reaktionskalorimeter ist gut, vorzugsweise optimal, thermisch isoliert und es weist kaum, vorzugsweise keine Wärmeverluste auf.
- Das kontinuierliche Reaktionskalorimeter ist bezüglich der hydro- und thermodynamischen Eigenschaften präzise charakterisiert, beispielsweise bezüglich der Nusselt-Zahl und/oder der Druckverluste.
- Das kontinuierliche Reaktionskalorimeter weist eine vergleichbare Mischleistung auf wie die Reaktionen, in denen der Herstellungsprozess anschliessend erfolgen soll, d.h. wie die zu skalierenden Reaktoren.
- Das kontinuierliche Reaktionskalorimeter weist ein enges Verweilzeitverhalten auf, wobei "eng" im Sinne von einer Annäherung an eine Pfropfenströmung zu verstehen ist.
- Das kontinuierliche Reaktionskalorimeter lässt sich schnell und effizient reinigen.

Es lassen sich die unterschiedlichsten Arten von Mischer-Wärmetauschern mit statischen Mischern im erfindungsgemässen Kalorimeter verwenden, insbesondere von bekannten Mischer-Wärmetauschern mit statischen Mischergeometrien. Vorzugsweise werden Reaktoren mit Mischer-Wärmetauscher verwendet, welche in Herstellungsprozessen eingesetzt werden und welche für Laboruntersuchungen und somit zur Verwendung als Kalorimeter skaliert werden können.

In bevorzugten Ausführungsformen wird das Prinzip eines Contiplant-Millireaktors verwendet, wie er in CH 702 311 B1 beschrieben ist oder das Kalorimeter wird auf das Prinzip eines Reaktors gemäss EP 3 181 221 A1 basiert. Diese zwei Reaktoren haben den Vorteil, dass sie in Herstellungsprozessen eingesetzt werden und dass sie zu Versuchszwecken im Labor auf relativ kleine Dimensionen skaliert werden können. Somit lässt sich ein Kalorimeter schaffen, das im Verhalten einem realen Prozessreaktor entspricht, das jedoch als Messgerät eingesetzt wird. Sind die Versuche im Contiplant-Reaktor bzw. im Reaktor gemäss EP 3 181 221 A1 erfolgreich, lässt sich eine Reaktion kontinuierlich auf einen beliebigen Durchsatz und somit für den Herstellungsprozess erweitern.

Damit die oben genannten sieben Bedingungen bzw. Kriterien erfüllt sind, weist das erfindungsgemässe Kalorimeter vorzugsweise die nachfolgend angegebenen körperlichen Merkmale auf. Die bekannten Reaktoren bzw. die Mischer-Wärmetauscher sind vorzugsweise für die Verwendung als Kalorimeter entsprechend angepasst und verändert.

Das kontinuierliche Reaktionskalorimeter erfasst die Temperaturen bzw. den Temperaturverlauf mit hoher Genauigkeit.

Es wurden zahlreiche Untersuchungen zur Messung der Temperatur in langsam durchströmten Kanälen durchgeführt. Dabei wurde festgestellt, dass die Temperatursensoren erhebliche Messfehler aufwiesen. Der Grund liegt bei der Wärmeleitung der Temperatursensoren, da an ihrer Sensorspitze, wo die Temperatur erfasst wird, bei kleinen Strömungsgeschwindigkeiten sehr kleine Wärmeübertragungskoeffizienten auftreten. Dies führt dazu, dass grosse Messfehler infolge der Wärmeleitung entstehen.

Das erfindungsgemässe Kalorimeter weist somit vorzugsweise ein optimales Verhältnis zwischen Sensorgrösse (Eigenmasse) und Sensorlänge auf. Zudem lässt sich der Wärmeübertragungskoeffizient verbessern, indem die Temperatursensoren in den statischen Mischer geführt werden. Es ist bekannt, dass der Wärmeübergang mit statischen Mischern im Vergleich zu einem Leerrohr um den Faktor 3 - 10 besser ist.

Das erfindungsgemässe Kalorimeter weist vorzugsweise mehrere Temperatursensoren auf, die einzelne Messstellen bilden. Vorzugsweise sind die mehreren Temperatursensoren durch einen Mehrfachtemperatursensor mit mehreren Messstellen gebildet, der durch den statischen Mischer verläuft. Vorzugsweise sind die Temperatursensoren in einer Kapillare bzw. einem Schutzrohr integriert. Je nach Ausführungsform ist der Mehrfachtemperatursensor bzw. die mehreren einzelnen Temperatursensoren zentrisch oder exzentrisch zu einer Längsmittelachse des Mischer-Wärmetauschers angeordnet. Mit diesen Massnahmen wird erreicht, dass die Temperatur mit einer Genauigkeit von +/- 1°C gemessen werden kann.

Als Temperatursensoren lassen sich einstufige und mehrstufige einsetzen. Sie sind beispielsweise PT-100 Sensoren, Thermoelemente beispielsweise des Typs K oder Typs J, Glasfasersensoren oder Fibre-Bragg-Sensoren. Derartige Temperatursensoren haben sich sowohl in Laborsystemen als auch in industriellen Anwendungen bestens bewährt. Der übliche Messbereich der Temperatursensoren liegt vorzugsweise zwischen - 60°C bis 250°C.

Das kontinuierliche Reaktionskalorimeter ist gut, vorzugsweise optimal, thermisch isoliert und es weist kaum, vorzugsweise keine Wärmeverluste auf.

Es wurden zahlreiche Messungen an Contiplant-Millireaktoren gemäss CH 702 311 B1 durchgeführt. Der beschriebene Reaktor wurde zwischen den Flanschen mit einer zusätzlichen Isolation, welche beispielsweise in ein Stahlgehäuse einpackt, wird, ausgerüstet. Zudem wurde der Reaktor mit einer erfindungsgemässen zusätzlichen Kopfisolation bestückt. Diese wird später im Detail beschrieben.

Für die Isolation wurden handelsübliche Materialen verwendet, beispielsweise PEEK (Polyetheretherketon), Mineralfasern, Steinwolle, Silikat, geschäumtes Glas, Aerogel, PU-Schaum oder flexible stoffartige Isoliermatratzen.

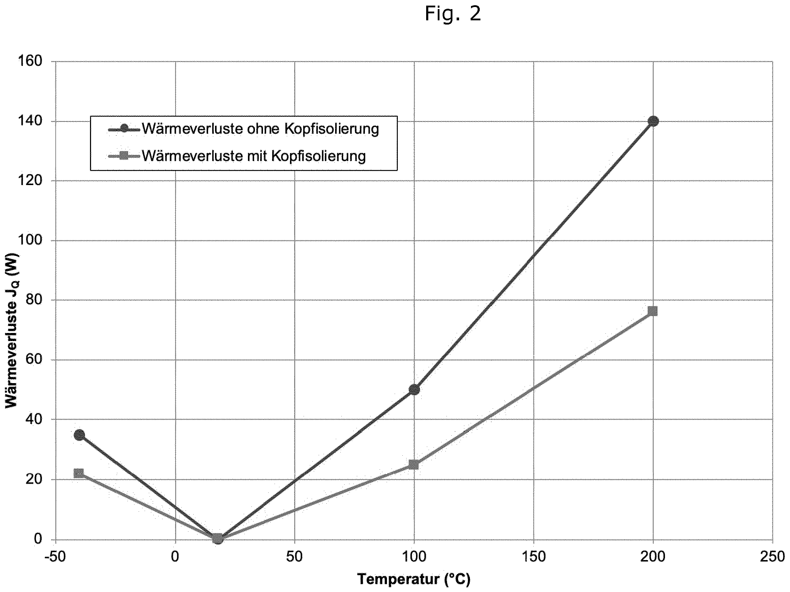

Figur 2 zeigt die Wärmeverluste in Funktion der Temperatur eines Contiplant-Reaktors. Sowohl mit Kopfisolation als auch ohne Kopfisolation sind die Wärmeverluste im Laborreaktor leider erheblich, so dass eine kalorimetrische Analyse fast nicht möglich scheint. Weitere Berechnungen und Messungen haben aber überraschenderweise ergeben, dass 95% der Wärmeverluste über die Kopfflansche verloren gehen. Setzt man sehr dicke Isolationen an den Flanschen ein, so reduziert sich der Wärmeverlust erheblich. Leider ist dann jedoch die funktionale und flexible Verwendung der zahlreichen Messstellen nicht mehr gewährleistet.

Es wurde zudem erkannt, dass ein skalierbarer, kontinuierlicher Reaktor nur im Bereich zwischen den Flanschen als kontinuierliches Reaktionskalorimeter eingesetzt werden kann. Wird die Reaktion in der Flanschzone gestartet, so muss mit erheblichen Abweichungen im Wärmefluss gerechnet werden, die eine Temperaturmessung verfälschen würden. Im erfindungsgemässen Kalorimeter wird deshalb der Feedstrom, der die Reaktion startet, erst beim Flanschende am Eintritt des kontinuierlichen Reaktionskalorimeters dosiert. Dies erfolgt vorzugsweise über eine Impfstelle resp. über eine Kapillare, die in das kontinuierliche Reaktionskalorimeter zum Flanschende am Eintritt hineinreicht. So lässt sich die durch die Reaktion entstehende Wärme ohne messbare Verluste vollständig erfassen. Vereinfacht spricht man von der Flanschzone mit grossen Wärmeverlusten und von der Rohrzone mit sehr kleinen Wärmeverlusten.

Die Verbindungen am Ein- und Austritt können Flansche beliebiger Form, Schneidringverschraubungen, Clamp-Verschraubungen oder gefräste Blöcke sein. Sämtliche Verbindungen besitzen eine erhebliche Masse, was generell zu einem erhöhten Wärmeverlust führt. Vereinfacht werden alle diese Verbindungen in diesem Text als Flanschverbindungen bezeichnet.

Eine weitere Fehlerquelle für die Messung stellt eine mögliche Abkühlung in der Flanschverbindung beim Durchfliessen der Feedströme dar. Auch wenn die Verweilzeit beim Durchfliessen der Flanschverbindungen am Eintritt sehr kurz ist, so ist eine Temperaturveränderung der Feedströme möglich. In einer einfachen Ausführungsform des erfindungsgemässen Kalorimeters wird deshalb der Kopfflansch auf die Feed-Temperatur temperiert. In einer bevorzugten erfindungsgemässen Ausführungsform ist die Flanschverbindung auf ihrer Innenseite mit einem isolierenden Material ausgekleidet, so dass der Wärmeübergang auf ein Minimum reduziert wird.

Diese Isolierung erfolgt je nach Ausführungsform in Form einer Beschichtung oder in Form von Einbauten wie Hülsen, Halbschalen oder anderen passgenauen Bauteilen. Die Beschichtung ist vorzugsweise beliebig. In anderen Ausführungsformen sind der Flansch und/oder die Feedstrom-Leitungen vollständig in einem isolierenden Material ausgeführt. Als Materialien eignen sich vorzugsweise sämtliche isolierenden Werkstoffe, vorausgesetzt diese Werkstoffe sind korrosionsbeständig gegenüber den Feedströmen. Bevorzugt werden Materialien wie Glas oder Kunststoffe wie PTFE, PEEK PP, PE, PVDF oder eine rostfreie Inox Hülse verwendet. Als Beschichtungen eignen sich vorzugsweise FEP, PTFE-Beschichtungen, Emaille- oder ETFE-Beschichtungen. Dank der Temperierung und bevorzugter dank diesen Isolierungen ist es möglich, Temperaturabweichungen der Feedströme, welche infolge des Durchströmens durch die Flanschverbindung am Eintritt auftreten, auf ein Minimum zu reduzieren.

Der Wärmeverlust am Austritt des kontinuierlichen Reaktionskalorimeters kann üblicherweise vernachlässigt werden, wenn die Reaktion bereits abgeschlossen ist. Das bedeutet, dass entweder 100% des Edukts umgesetzt ist oder dass der Restumsatz am Austritt bestimmt wird. Umsatzmessungen können durch Probenahme, Online (d.h. in einem Bypass) oder auch Inline (d.h. in der Prozessleitung). Wird bei der Kalorimetrie allerdings die Wärmebilanz im Mantel verwendet, so ist es sinnvoll, auch die Flanschverbindungen am Austritt entsprechend den obigen Vorschlägen zu isolieren.

Das kontinuierliche Reaktionskalorimeter ist präzise charakterisiert, beispielsweise bezüglich der Nusselt-Zahl und/oder der Druckverluste.

Als Erstes wird geprüft, ob der Wärmefluss in einer ausreichenden Genauigkeit erfasst werden kann. EP 3 181 221 A1 beschreibt ausführlich, wie sich der Wärmefluss über die Wärmebilanz auf der HTM (Heat transfer media)-Seite erfassen lässt. Es ist bekannt, dass mit der richtigen Messtechnik bei HTM Temperaturdifferenzen > 5°C die abgeführte Wärme genau erfasst werden kann. Bei einem kleinen Feedstrom von 1 - 200 ml/min wird es allerdings schwierig, HTM Temperaturdifferenzen von > 5° zu erreichen. Dies kommt daher, dass die chemisch produzierte Wärmemenge meist zu klein ist. Zudem benötigt man einen minimalen Massenstrom auf der HTM-Seite, um ausreichend gute Wärmeübergänge zu erreichen. Dies führt dazu, dass die HTM-Temperaturdifferenzen oft bei 1 - 2 °C liegen und somit die abgeführte Wärmemenge $\dot{Q}_{ab}$ nicht genau bestimmt werden kann.

Nachfolgend werden unter Erwähnung von theoretischen Grundlagen aus EP 3 181 221 A1 die Zusammenhänge nochmals erläutert:

Die Grundlage zur Bestimmung der Reaktionsenthalpie bzw. des Wärmestromes ist die nachfolgende mathematische Beschreibung eines endo- oder exothermen Reaktionsprozesses im kontinuierlichen Reaktionskalorimeter:

$$\frac{\delta Q}{\delta t} = \underbrace{\frac{\delta(mc_pT)}{\delta t}}_{\substack{Zeitliche \\ \ddot{A}nderung\ im \\ Bilanzraum}} = \underbrace{\left(\dot{m}c_pT\right)_0}_{\substack{durch \\ Konvektion \\ zuge f\ddot{u}hrt}} - \underbrace{\left(\dot{m}c_pT\right)_a}_{\substack{durch \\ Konvektion \\ abge f\ddot{u}hrt}} + \underbrace{\left(-\Delta H_{m,R}\right)\cdot V \cdot r_v}_{\substack{durch\ Reaktion \\ zeitlich \\ verbrauchte\ oder\ erzeugte \\ W\ddot{a}rmemenge}} + \underbrace{k \cdot A \cdot \left(T_{gr} - T\right)}_{\substack{ausgetauschte \\ W\ddot{a}rmemenge \\ pro \\ Zeiteinheit}}$$

Gl. 1

Dabei ist Q der Wärmegehalt der Reaktionsmasse im kontinuierlichen Reaktionskalorimeter, m die Masse, $\dot{m}$ der Massenstrom, $c_p$ die Wärmekapazität, t die Zeit, T die Temperatur, $\Delta H_{m,R}$ die Reaktionsenthalpie, V das Reaktorvolumen, $r_v$ die Reaktionsgeschwindigkeit, A die Wärmeübertragungsfläche und k der Wärmeübertragungskoeffizient.

Um eine Wärmebilanz in einem kontinuierlichen arbeitenden Reaktionskalorimeter durchführen zu können, sollten folgenden Stoffdaten bekannt sein:

- die temperaturabhängige Wärmekapazität, Wärmeleitfähigkeit und Dichte, sowie
- Informationen über den Reaktionsverlauf, beispielsweise ob er monoton oder sprunghaft ist und ob sich Änderungen des Phasenverhaltens (Entstehen oder Verschwinden von Phasen wie fest, flüssig, gasförmig) ergeben.

Eine ideale Wärmebilanz über das Wärmeträgermedium (HTM) zeigt Gleichung GL. 2. Damit lässt sich der abgeführte, mittlere Wärmestrom Q $_{ab}$ pro Reaktor, Reaktorabschnitt oder Reaktorsegment (im Folgenden vereinfacht alle als Reaktorabschnitt bezeichnet) ermitteln.

$$\dot{Q}_{ab} = \dot{m}_{HTM} \cdot c_{pHTM} \cdot (T_{HTM\ AUS} - T_{HTM\ EIN}) \qquad \text{Gl. 2}$$

Dabei steht $\dot{m}_{HTM}$ für den Massenstrom des Wärmeträgers, $c_{pHTM}$ für die mittlere Wärmekapazität des Wärmeträgers und $T_{HTM\ AUS}$ - $T_{HTM\ EIN}$ für die Temperaturdifferenz über den erfassten Reaktorabschnitt.

Zudem kann mit der Gleichung 3 der nicht abgeführte Wärmestrom $\dot{Q}_{nab}$ im erfassten Reaktorabschnitt bestimmt werden.

$$\dot{Q}_{nab} = \dot{m}_{Produkt} \cdot c_{p\ Produkt} \cdot (T_{Produkt\ AUS} - T_{Produkt\ EIN}) \qquad \text{Gl. 3}$$

Idealerweise ist gemäss Gleichung 4 der mittlere chemische produzierte Wärmestrom $\dot{Q}_{chem}$ gleich gross wie die Summe der mittleren Wärmeströme $\dot{Q}_{nab} + \dot{Q}_{ab}$. Dabei steht $\dot{m}_{Produkt}$ für den Massenstrom des Reaktionsgemisches, $\Delta H_r$ für die spezifische Reaktionsenthalpie und $X_{Anteil}$ für den Teilumsatz im Reaktorabschnitt.

$$\dot{Q}_{nab} + \dot{Q}_{ab} = \dot{Q}_{chem} = \dot{m}_{Produkt} \cdot \Delta H_r \cdot X_{Anteil} \qquad \text{Gl. 4}$$

Diese klassische Wärmebilanz setzt voraus, dass alle Sensoren, d.h. sämtliche Durchflusssensoren zur Erfassung des Massenstromes und sämtliche Temperatursensoren kalibriert sind, und dass die Wärmeverluste tolerabel, bekannt und quantifizierbar oder sogar vernachlässigbar sind.

Aus der mathematischen Beschreibung wird klar, dass es nicht möglich ist, die spezifische Reaktionsenthalpie $\Delta H_r$ zu bestimmen. Es müssen also andere Methoden gefunden werden, um die gewünschte spezifische Reaktionsenthalpie $\Delta H_r$ zu bestimmen.

Wäre der Wärmedurchgangskoeffizient k über die Länge des ganzen Reaktionskalorimeters bekannt, so könnte mittels der Gleichung 5 abschnittsweise der Temperaturverlauf auf der Produktseite dargestellt und verglichen werden. k steht dabei für den Wärmedurchgangskoeffizienten, A für die Größe der Heizfläche und $\Delta T_m$ bildet die Temperaturdifferenz zwischen heizendem und beheiztem Stoff. Dies ist jedoch nur möglich, wenn der k-Wert über das ganze Reaktionskalorimeter, bzw. über den ganzen Reaktorabschnitt bekannt ist.

$$J_Q = k \cdot A \cdot \Delta T_m \qquad \text{Gl. 5}$$

Gelingt es, die $\alpha$-Wärmeübergangswerte auf der Produkt- und auf der HTM-Seite über Nusselt-Reynolds-Prandtl-Funktionen zu beschreiben, dann wäre es möglich, auch bei sehr kleinen Durchflüssen von 1 bis 200 ml/min ein Reaktionskalorimeter präzise zu betreiben. Die Berechnung von $\alpha$-Wärmeübergangswerten in Doppelmantel-Mischer-Wärmetauschern mit statischen Mischern auf der Produkt- und auf der HTM-Seite mit Nusselt-Reynoids-Prandtl-Korrelationen sind dem Fachmann ausreichend bekannt und werden in der Literatur ausreichend dokumentiert.

Von Interesse sind insbesondere die Nusselt - Korrelationen auf der Produktseite im statischen Mischer. Es stellt sich hier die Frage, ob bei statischen Mischern mit einer sehr guten Mischleistung die Nusselt - Korrelation längenabhängig ist und ob für die ganze Länge des Reaktionskalorimeters der $\alpha$-Wert konstant ist.

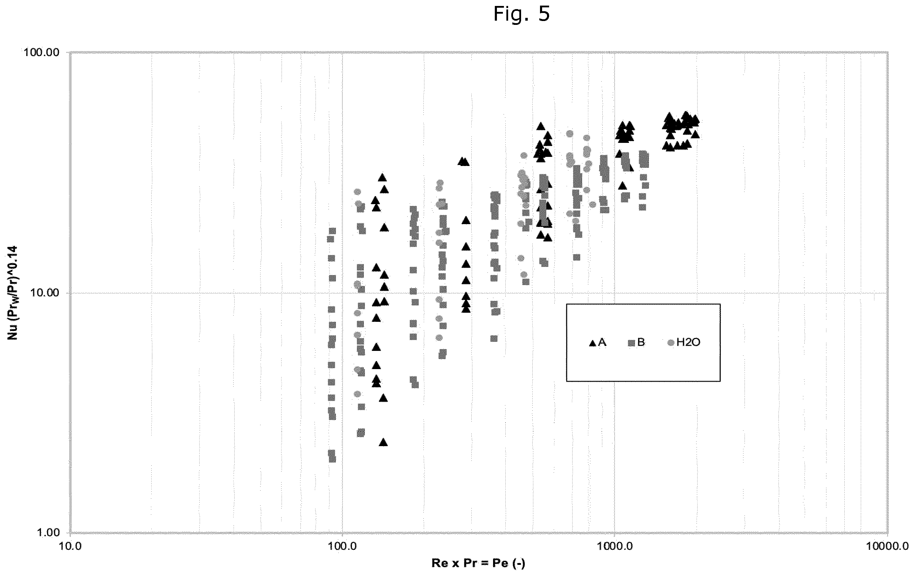

Figur 5 zeigt die Auswertung von Wärmeübergangs-Messungen mit Wasser H2O, Isopropanol A und Ethylenglykol B mit dem Contiplant Reaktionskalorimeter mit einem Durchmesser von 12.3 mm und einer Länge von 500 mm. Der Durchsatzbereich betrug 1 bis 200 ml/min. Es wurde eine Temperatursensoreinheit in Form eines axialen Mehrfachsensors mit zehn Messstellen verwendet, der entlang des statischen Mischers im Abstand von ca. 50 mm die Temperatur erfasste. Der $\alpha$-Wert im Mantel wurde so hoch gewählt, dass dieser als konstant angenommen und somit vernachlässigt werden konnte. Das Streubild ist somit nur abhängig vom $\alpha$-Wert im statischen Mischer. Die Temperaturdifferenzen lagen bei 1 °C - 50 °C.

Betrachtet der Fachmann das Streubild dieser Messung, so wird er sich folgende Fragen stellen:

- Sind die Nusselt-Zahlen in diesem Reynolds-Zahlbereich im statischen Mischer konstant oder längenabhängig?
- Wie viele der Nusselt-Werte wurden mit zu kleinen Temperaturdifferenzen ausgewertet?

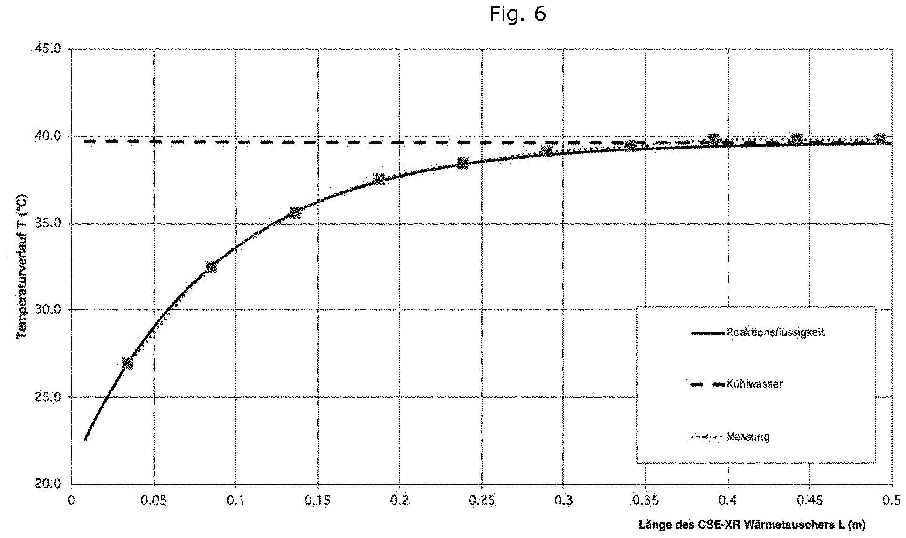

Es war klar, dass die Nusselt - Auswertung einiger Messpunkte aufgrund der kleinen Temperaturdifferenzen fehlerhaft sein könnte. Wertet man jedoch pro Versuch immer alle zehn Messpunkte entlang des kontinuierlichen Reaktionskalorimeters aus, so zeigt sich überraschenderweise über den ganzen Mischer ein konstanter k-Wert (siehe Figur 6). Der erfindungsgemässe Schlüssel zur Auswertung des Wärmeübergangs liegt somit in der Auswertung aller gemessenen, hier aller zehn Messpunkte mit einem ermittelten k-Wert.

Die Messungen erfolgten bei Reynolds-Zahlen < 160. Bei grösseren Reynolds-Zahlen befindet man sich im Übergangsbereich und es hat sich gezeigt, dass die Streuung der Messungen deutlich grösser ist. In Strömungsbereichen mit Re > 160 kann es zu erheblichen Abweichungen kommen, so dass das kontinuierliche Reaktionskalorimeter vorzugsweise zusätzlich auf die konkrete Anwendung kalibriert werden sollte.

Fig. 6 zeigt die Auswertung eines Versuches bei 60 ml/min. Mit einem k-Wert können die 10 Messwerte reproduziert werden. Überraschenderweise zeigen sämtliche Versuche einen präzisen identischen Temperaturverlauf. Die Korrelation, beispielsweise für das Contiplant Reaktionskalorimeter ø12.3 mm, welche aus den k-Werten abgeleitet wurde, wird in Gleichung 6 dargestellt.

$$Nu = 3.89 \cdot (Re \cdot Pr)^{0.32} \cdot \left(\frac{Pr}{Pr_w}\right)^{0.14} \qquad \text{Gl. 6}$$

Mit dieser Korrelation und dem entsprechenden Wissen über den $\alpha$-Wert im Mantel ist es nun möglich, die gewünschte spezifische Reaktionsenthalpie $\Delta H_r$ zu bestimmen. Messungen haben ergeben, dass eine spezifische Reaktionsenthalpie $\Delta H_r$ mit einer Genauigkeit von +/-10% und besser erreicht wurde.

Der Druckverlust $\Delta p$ in einem statischen Mischer kann mit der bekannten Gleichung 7 berechnet werden.

$$\Delta p = \frac{\xi}{2} \cdot \rho \cdot w^2 \cdot \frac{L}{D} \qquad \text{Gl. 7}$$

$\rho$ entspricht der Dichte, $w$ der Strömungsgeschwindigkeit, $L$ der Länge und $D$ dem Durchmesser. $\xi$ entspricht dem Widerstandsbeiwert, der abhängig von der Reynolds-Zahl ist.

Das kontinuierliche Reaktionskalorimeter weist eine vergleichbare Mischleistung auf wie die Reaktionen in denen der Herstellungsprozess anschliessend erfolgen soll, d.h. wie die zu skalierenden Reaktoren.

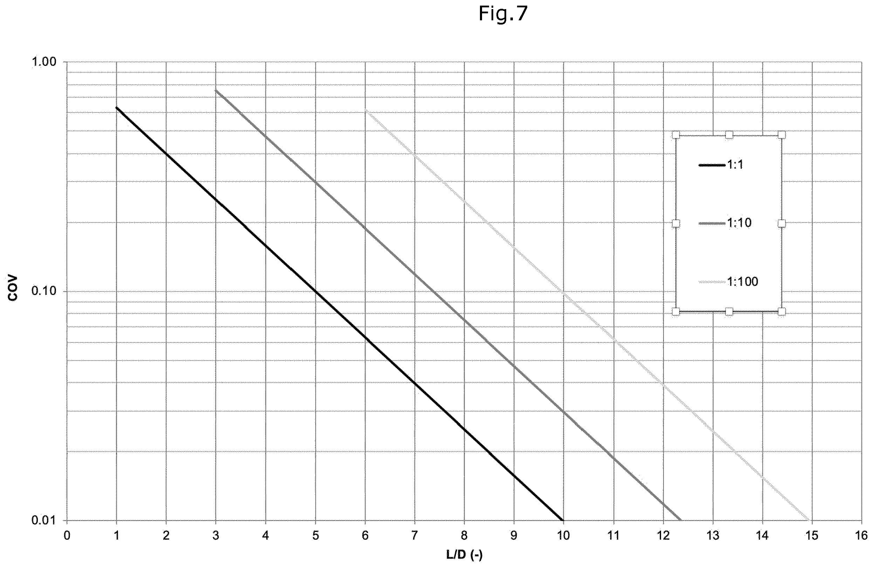

Die Mischgüte wird in der statischen Mischtechnik mit dem Variationskoeffizienten COV beschrieben. Dem Fachmann sind diese Werte bestens bekannt und es gibt zahlreiche Literatur darüber. Figur 7 zeigt den Variationskoeffizienten COV über die relative Länge des verwendeten Mischers bzw. des Wärmestromkalorimeters. Mit dieser Darstellung ist es möglich, ein Scale-up bei vergleichbarer Mischleistung auszulegen. Der Fluitec Wärmetauscher vom Typ CSE-XR ist hierfür vorzugsweise, jedoch nicht ausschliesslich, geeignet.

Das kontinuierliche Reaktionskalorimeter weist ein enges Verweilzeitverhalten auf.

Die Bodenstein-Zahl wird üblicherweise mit dem 1-d-Dispersionsmodell beschrieben. Diese Modellvorstellung nimmt den 1-dimensionalen Vorgang in einem Strömungsrohr (Pfropfenströmung) als Ansatzpunkt. In Richtung z erfolgt eine Strömungsgeschwindigkeit $u_z$, die bei dem jeweiligen Mischerquerschnitt A praktisch konstant ist. Durch molekulare Diffusion, turbulente Konvektion und durch das durch Randreibung (Rauheit) bewirkte parabolische Geschwindigkeitsprofil (z.B. laminare Rohrströmung) wird es zu Abweichungen von der idealen Rohrströmung kommen. Als Größe zur Erfassung dieser Effekte wird der axiale Dispersionskoeffizient $D_{ax}$ verwendet, der somit ein Mass für die Rückvermischung ist. Die Ansatzgleichung für das 1-d-Dispersionsmodell lautet:

$$\frac{\partial c}{\partial t} = -u_z \cdot \frac{\partial c}{\partial z} + D_{ax} \cdot \frac{\partial^2 c}{\partial z^2} \qquad \text{Gl. 8}$$

und wird, um eine Lösung zu erleichtern, in dimensionsloser Form angeschrieben. Für den stationären Fall entsteht dann:

$$\frac{\partial\left(\frac{c}{c_0}\right)}{\partial\left(\frac{t}{\tau}\right)} = -\frac{\partial\left(\frac{c}{c_0}\right)}{\partial\left(\frac{z}{L}\right)} + \left(\frac{D_{ax}}{u_z \cdot L}\right) \cdot \frac{\partial^2\left(\frac{c}{c_0}\right)}{\partial\left(\frac{z}{L}\right)^2} = 0 \qquad \text{Gl. 9}$$

Darin ist die dimensionslose Kenngröße enthalten, nämlich die sogenannte Bodenstein-Zahl,

$$Bo = \frac{u_z \cdot L}{D_{ax}}$$

Gl. 10

die mit einer "charakteristischen Länge " L des Mischer-Wärmetauscher-Gehäuses definiert ist. Die exakte Lösung der stationären und dimensionslosen Gleichung lautet (nach Levenspiel und Smith):

$$c_i\{\theta, Bo\} = h(\theta) = \sqrt{\frac{Bo}{4 \cdot \pi \cdot \theta}} \cdot e^{\left[ -\frac{(1-\theta)^2 \cdot Bo}{4 \cdot \theta} \right]}$$

Gl. 11

Als Grenzfälle des Dispersionsmodells ergeben sich das Verdrängungs-Modell ohne axiale Dispersion für Bo = ∞ (ideale Rohrströmung) und das Rückvermischungsmodell mit axialer Dispersion für Bo = 0 (idealer Rührkessel).

Untersuchungen im ContiplantPILOT-Reaktor mit einem Durchmesser ø 12.3 mm und einer Länge von 500 mm haben ergeben, dass eine Bodenstein-Zahl von 80 - 100 bestens erreicht werden kann. Allerdings kann sich je nach Einbaulage, Viskositätsunterschied, Temperaturverlauf und Dichteunterschied die Bodensteinzahl und somit das Verweilzeitverhalten verschlechtern.

Zudem sollten die statischen Mischelemente passgenau gefertigt sein. Mischelemente mit einem zu grossen Spiel können erhebliche Totzonen aufweisen. So weist der ContiplantPILOT-Reaktor bei einem Spiel von mehr als 0.2 mm einen Totraumanteil von >10% auf, was wiederum in einem kontinuierlichen Reaktionskalorimeter nicht toleriert werden kann.

Ein schlechtes Verweilzeitverhalten führt zu einem schlechten Temperaturprofil - auch als verschmiertes Temperaturprofil bezeichnet - und sollte unbedingt verhindert werden.

Eine weitere Möglichkeit ist beispielsweise der Einsatz von Mischelementen gemäss EP 3 081 285 B1. Bei diesen Mischelementen werden die kritischen Randzonen so geöffnet, dass sich das Spaltvolumen zwischen den Mischelementen und der Rohrwand erheblich reduziert. Trotzdem sollte ein Mindestspiel von 0.2 mm eingehalten werden.

Das kontinuierliche Reaktionskalorimeter lässt sich schnell und effizient reinigen.

Das kontinuierliche Reaktionskalorimeter weist vorzugsweise eine Vorrichtung auf, die nach dem Versuch ein schnelles Spülen und Reinigen ermöglicht. Diese Forderung ist erfüllbar, da bereits nach wenigen Minuten ein stationärer Zustand für die Messung eintritt. Mit einer entsprechenden Spülung ist es möglich, täglich bis zu 50 Messungen durchzuführen. Entsprechende Vorschläge für die konkrete Verwirklichung sind in den hier beschriebenen bevorzugten Ausführungsformen angegeben.

Bei Erfüllung dieser Kriterien ist es vorzugsweise möglich, die Reaktionsenthalpie (kJ kg$^{-1}$) in ausreichender Genauigkeit herzuleiten, wobei "ausreichend" im Sinne von einer Genauigkeit von +/- 2 bis 10% zu verstehen ist.

Das erfindungsgemässe Kalorimeter weist vorzugsweise eine intelligente Mess- und Regeltechnik auf, die es ermöglicht, die Reaktionsführung in allen wichtigen Parametern analog zum geplanten Prozess nachzufahren. Vorzugsweise weist die intelligenten Mess- und Regeltechnik folgende Eigenschaften auf:

- Die intelligente Mess- und Regeltechnik regelt, überwacht, erfasst, wertet aus und dokumentiert alle Feed-Massenströme bzw. Feed-Volumenströme.
- Die intelligente Mess- und Regeltechnik erfasst, wertet aus und dokumentiert sowohl die HTM Temperaturen am Ein- und Austritt als auch die Temperaturen des axialen Mehrfachtemperatursensors.

Zusätzliche Optionen, wie eine Kalibrierung der Temperatursensoren, eine Erfassung der Wärmeabfuhr auf der HTM Seite, Berechnungen der Makro-Mischgüte und des Druckverlustes sind je nach Ausführungsform ebenfalls vorhanden.

Vorzugsweise kann die intelligente Mess- und Regeltechnik anhand der oben beschrieben Gleichungen 1 bis 6 die spezifische Reaktionsenthalpie $\Delta H_r$ berechnen.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Figur 1      eine schematische Darstellung eines Contiplant-Reaktors gemäss CH 702 311 B1;

Figur 2      eine graphische Darstellung der Wärmeverluste in Funktion der Temperatur in einem Contiplant-Reaktor gemäss Figur 1;

Figur 3      ein erfindungsgemässes kontinuierliches Reaktionskalorimeter auf der Basis eines Contiplant-Reaktors gemäss Figur 1 mit einer Isolierung entlang des Rohres und einer schematischen Darstellung einer Kopfisolierung;

Figur 4      eine Vorrichtung mit dem kontinuierlichen Reaktionskalorimeter gemäss Figur 3 mit einer Isolierung entlang des Rohres, einem axialen Mehrfachtemperatursensor mit zahlreichen Messstellen und mit einer schematisch dargestellten intelligenten Mess- und Regeltechnik;

Figur 5      eine graphische Darstellung der Nusselt-Zahlen in Funktion der Peclet-Zahl im kontinuierlichen Reaktionskalorimeter gemäss Figur 3;

Figur 6      eine graphische Darstellung der k-Wert Auswertung einer Messung aus dem kontinuierlichen Reaktionskalorimeter gemäss Figur 3;

Figur 7      eine graphische Darstellung des Variationskoeffizienten COV aus dem kontinuierlichen Reaktionskalorimeter gemäss Figur 3;

Figur 8      einen Schnitt durch eine Flanschverbindung am Eintritt des kontinuierlichen Reaktionskalorimeters gemäss Figur 3;

Figur 9      einen Schnitt durch eine Flanschverbindung am Eintritt des kontinuierlichen Reaktionskalorimeters gemäss Figur 3 in einer zweiten Ausführungsform mit einem Vormischer und

Figur 10      eine Vorrichtung mit einem erfindungsgemässen kontinuierlichen Reaktionskalorimeter in einer 3D Darstellung, ohne Kopfisolation.

BESCHREIBUNG BEVORZUGTER AUSFÜHRUNGSFORMEN

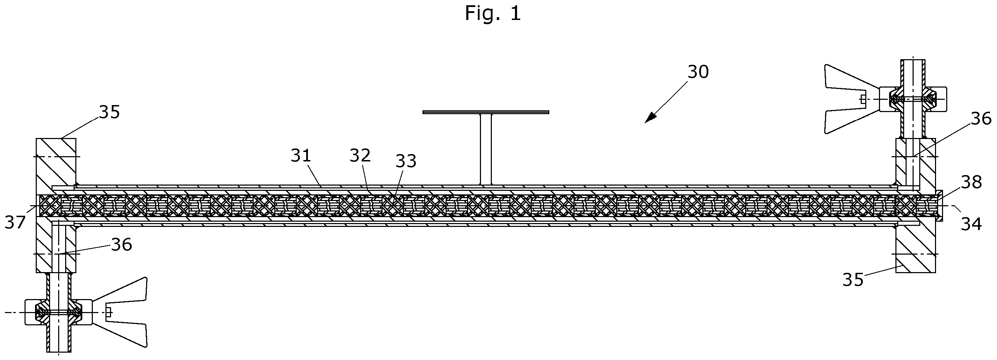

Figur 1 zeigt einen Doppelmantel-Mischer-Wärmetauscher 30, der auf dem Markt unter der Bezeichnung "Contiplant" bekannt ist. Er weist ein äusseres Doppelmantelrohr 31 und ein im Innern des Doppelmantelrohrs 31 angeordnetes Mischrohr 32 auf. Das Mischrohr 32 weist einen statischen Mischer bzw. eine statische Mischergeometrie 33 auf. Das Doppelmantelrohr 31 definiert eine Längsmittelachse 34. Das Doppelmantelrohr 31 ist auf beiden Stirnseiten mit einem Flansch 35 verschlossen. Im Flansch 35 ist eine radiale Bohrung 36 vorhanden zur Versorgung des Doppelmantelrohrs 31 mit einem Heiz- oder Kühlmedium (HTM). Stirnseitig ist in einem ersten Flansch 35 ein Zulauf 37 für einen Eduktstrom vorhanden. Der zweite Flansch 35 weist stirnseitig einen Auslauf 38 für einen Produktstrom auf. Vorzugsweise ist das Mischrohr 32 aussen und/oder innen im Querschnitt rechteckig ausgebildet.

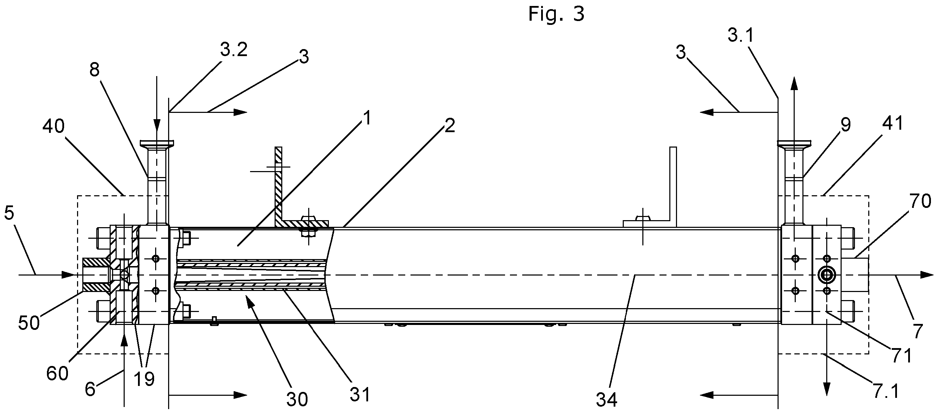

Figur 3 zeigt die Verwendung eines derartigen Doppelmantel-Mischer-Wärmetauschers 30 gemäss Figur 1 in einem erfindungsgemässen kontinuierlichen Reaktionskalorimeter. Der Wärmetauscher 30 weist hier einen Innendurchmesser D auf. Der Innendurchmesser D betrifft den Innenraum, in dem der statische Mischer angeordnet ist.

Der Wärmetauscher 30 ist mit einer weitere Ummantelung 2 umgeben, die beabstandet zum Doppelmantelrohr 31 angeordnet ist. Dadurch ist ein Raum für eine Wärmeisolation 1 geschaffen. Die für die Isolation 1 geeigneten Materialien sind bereits weiter oben im Text ausführlich angegeben.

Die Flansche 35 der Vorrichtung gemäss Figur 1 sind im erfindungsgemässen Kalorimeter durch Flanschzonen 40, 41 ergänzt. Diese Flanschzonen 40, 41 bilden auf beiden Stirnseiten der Vorrichtung je eine Kopfisolation.

Grund hierfür ist, wie bereits anhand der Figur 2 dargelegt, dass der grösste Anteil der Wärmeverluste an den Flanschverbindungen entsteht. Aus diesem Grund ist vorzugsweise mindestens die eingangsseitige Flanschzone 40, je nach Ausführungsform auch die ausgangsseitige Flanschzone 41 des erfindungsgemässen kontinuierlichen Reaktionskalorimeters thermisch isoliert. Die Isolierung ist je nach Ausführungsform innen, aussen oder sowohl innen wie auch aussen an den Flanschzonen 40, 41 ausgebildet.

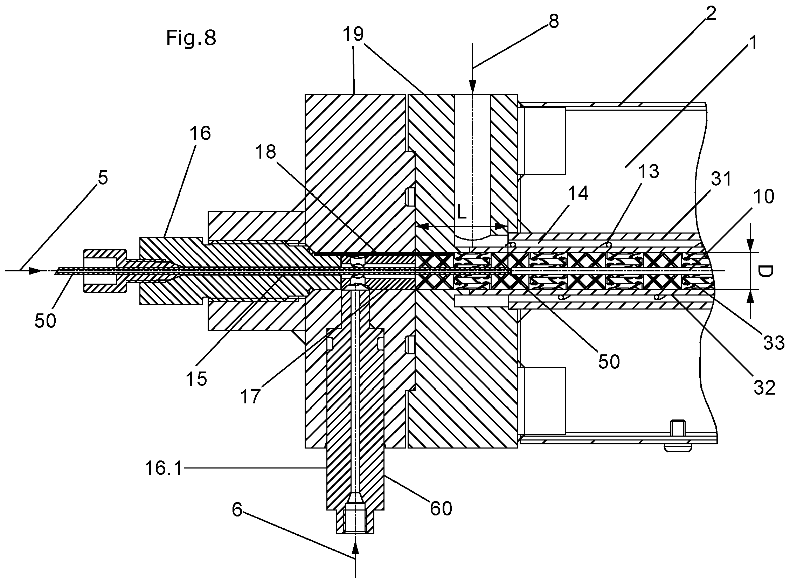

Eine bevorzugte Ausbildung dieser stirnseitigen Isolation ist in den Figuren 3 und 8 dargestellt. Die Zone zwischen dem ersten Flanschende am Eintritt, beginnend im Grenzbereich bzw. an der Achse 3.2, und dem zweiten Flanschende am Austritt, endend im Grenzbereich bzw. an der Achse 3.1, wird vereinfacht als Rohrzone 3 bezeichnet (siehe Figur 3). In diesem Bereich wird die Wärme aktiv zu- oder abgeführt. Der Wärmeaustausch erfolgt über einen HTM Zulauf 8 im Doppelmantel 31 wobei das HTM Medium danach in einen Ringspalt 14, gebildet durch den Doppelmantel 31, strömt (siehe Figur 8).

Das kontinuierliche Reaktionskalorimeter kann sowohl im Gegenstrom als auch im Gleichstrom betrieben werden. Im Gegenstrom wird der HTM Zulauf 8 zu einem HTM Auslauf 9 und umgekehrt. Der Zulauf 8 und der Auslauf 9 sind über den Ringspalt 14 miteinander verbunden.

Der Ringspalt 14 kann leer ausgebildet sein.

Es ist jedoch darauf zu achten, dass die $\alpha$-Wärmeübergangswerte im Ringspalt 14 entlang des kontinuierlichen Reaktionskalorimeters bekannt sind. In einer bevorzugten Ausführungsform ist der $\alpha$-Wärmeübergangswert über den ganzen Bereich konstant. Dies lässt sich beispielsweise dadurch erreichen, dass der Ringspalt 14 mit Umlenkungen, z.B. Umlenkblechen, Schaschlik-Elementen oder mit einem Wendel 13 ausgerüstet ist.

In der eingangsseitigen Flanschzone 40 sind ferner vorzugsweise mindestens zwei Zuläufe 50, 60 für Eduktströme, d.h. für Feedströme 5, 6, vorhanden. Ein erster Feedstrom-Zulauf 50 verläuft in diesem Beispiel stirnseitig parallel zur Längsmittelachse 34 der Vorrichtung. Ein zweiter Feedstrom-Zulauf 60 verläuft radial zur Längsmittelachse 34 (siehe Figuren 3 und 8).

Wird die Reaktion in der eingangsseitigen Flanschzone 40 gestartet, so muss mit erheblichen Abweichungen im Wärmefluss gerechnet werden. In bevorzugten Ausführungsformen wird deshalb der erste Feedstrom 5, der die Reaktion startet, erst beim Flanschende, bzw. am Beginn der Rohrzone 3 dosiert.

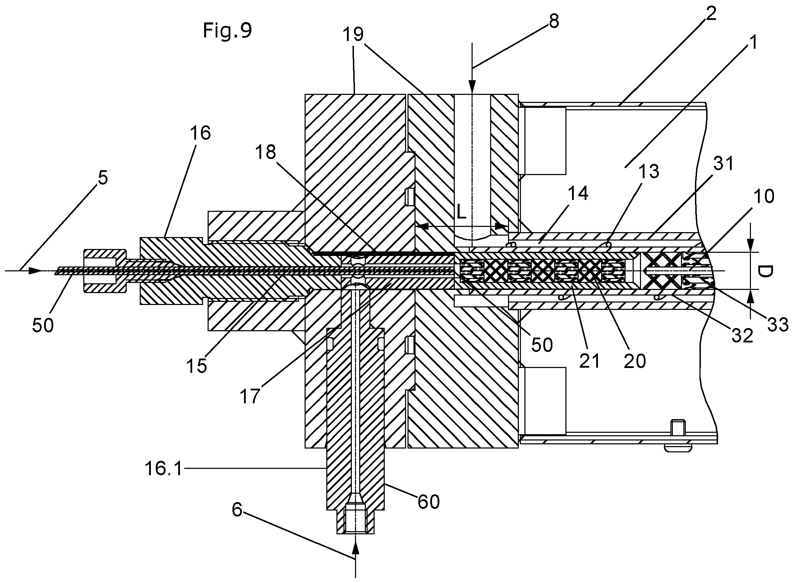

Dies erfolgt vorzugsweise mittels einer Kapillare bzw. mittels eines Dosierrohrs 15, das in den Mischerwärmetauscher zum Beginn 3.2 der Rohrzone 3 hineinreicht. Dies ist in Figur 8 gut erkennbar. Das Dosierrohr 15 bildet die Verlängerung des ersten Feedstrom-Zulaufs 50 und endet vorzugsweise erst nach dem HTM-Zulauf 8 bzw. im Falle eines Gegenstroms nach dem HTM-Auslauf 9. Vorzugsweise erfolgt der Flüssigkeitseintritt des ersten Feedstroms 5, also des Feedstroms, der die Reaktion startet, im Bereich der Länge L gemäss Figur 8. D.h. in einem Bereich kurz vor bis kurz nach dem HTM-Zulauf 8 bzw. HTM-Auslauf 9. Bevorzugt erfolgt der Flüssigkeitseintritt des ersten Feedstroms 5 jedoch am Beginn des Ringspaltes 14, wie in Figur 8 dargestellt ist. In der nachfolgend beschriebenen Ausführungsform gemäss Figur 9 ist ein Vormischer vorhanden, der die infolge starker Turbulenzen am Eintritt des Ringspaltes 14 erhöhten Wärmeübergänge, durch die isolierende Wirkung der Mischerhülse 21, abschwächt. Dadurch kann der Feedstrom bereits früher dosiert werden.

Das Ende des ersten Feedstrom-Zulaufs 50 liegt vorzugsweise benachbart zum Lumen für den Mehrfachtemperatursensor 10, der wie oben beschrieben im Innern entlang des Mischerwärmetauschers angeordnet ist. Der Sensor 10 ist in den Figuren nicht detailliert dargestellt. Er erstreckt sich entlang der Längsmittelachse 34 zwischen den zwei Grenzbereichen 3.1, 3.2 der Rohrzone 3. Er ist in diesem Beispiel axial angeordnet. Er kann jedoch auch dezentral angeordnet sein. Die für diese Temperaturmessung geeigneten mehreren Temperatursensoren bzw. ein geeigneter Mehrfachtemperatursensor sind weiter oben im Text bereits beschrieben.

Die zwei Feedstrom-Zuläufe 50, 60 sind vorzugsweise mit Stopfen 16, 16.1 mit Durchlassöffnungen, wobei die Stopfen 16, 16.1 aus einem isolierenden Material, wie zum Beispiel Glas, PEEK, PTFE oder PVDF, gefertigt sind.

Vorzugsweise ist der Durchgangskanal des Mischerwärmetauschers an seinem Eintritt mit einer zusätzlichen Rohrhülse 17 versehen. Diese reduziert die Verweilzeit der Flüssigkeiten bzw. Edukte am Eintritt. Vorzugsweise ist auch die Rohrhülse 17 aus einem isolierenden Material gefertigt. Dies verhindert, dass sich die Flüssigkeit beim Durchfliessen der Flanschverbindung unnötig erwärmt oder abkühlt.

Vorzugsweise ist auch am Austritt des Mischerwärmetauschers eine isolierende Rohrhülse 17 angeordnet. Dies insbesondere dann, wenn neben der k-Wert Bestimmung auch die abgeführte Wärme über den HTM Strom erfasst wird. So kann die durch die Reaktion entstehende Wärme ohne messbare Verluste vollständig erfasst werden.

In Figur 8 ist schematisch ein schwarzer Balken mit der Bezugsziffer 18 an einer inneren Rohrwand der Vorrichtung dargestellt. Der Balken zeigt an, wo vorzugsweise eine Zone 18 mit einer inneren Isolierung vorhanden ist. Je mehr Fläche mit der Rohrhülse 17 abgedeckt wird, desto weniger Temperaturabweichungen werden die Feedströme 5, 6 aufweisen und desto geringer sind die Wärmeverluste.

In einer alternativen Ausführungsform ist die Rohrhülse 17 in Form einer Halbschale ausgeführt. Je nach Ausführungsform weist die Rohrhülse zudem Eindrehungen und/oder Bohrungen auf, so dass die Feedströme unbehindert in das kontinuierliche Reaktionskalorimeter einströmen können. Dem Reaktionskalorimeter können standardmässig bis zu vier Feedströme zudosiert werden. Es können aber auch mehr Feedströme zugegeben werden.

Wie in Figur 3 erkennbar ist, weist die gegenüberliegende ausgangsseitige Flanschzone 41 einen HTM Auslauf 9 bzw. im Falle eines Gegenstrombetriebs einen HTM Zulauf 8 sowie einen Auslauf 70 für einen Auslaufstrom eines Produkts auf. D.h. im Falle eines Gegenstrombetriebs sind in Figur 3 die Bezugszeichen 8 und 9 zu vertauschen. Der Auslauf kann axial verlaufen, wie durch das Bezugszeichen 70 in Figur 3 dargestellt ist. In einer anderen Ausführungsform verläuft der Auslauf radial, wie in Figur 3 durch das Bezugszeichen 71 gezeigt ist. Obwohl diese zwei Ausläufe 70, 71 üblicherweise alternativ vorhanden sind, sind beide in der Figur 3 dargestellt.

Die Vorrichtung lässt sich über die mindestens zwei Feedstrom-Zuläufe 50, 60 spülen. Diese können hierzu einzeln oder zusammen betrieben werden.

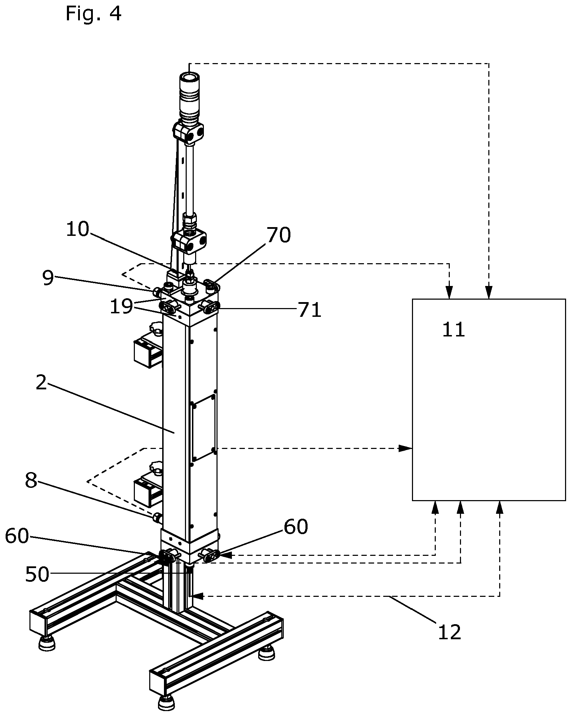

In Figur 4 ist eine Vorrichtung mit dem erfindungsgemässen kontinuierlichen Reaktionskalorimeter gemäss Figur 3, und einer intelligenten Mess- und Regeltechnik 11 sowie die Verbindungen 12 der Temperatursensoren und allfälliger weiterer Sensoren zur Mess- und Regeltechnik 11 schematisch dargestellt. Nicht dargestellt sind die Flanschzonen 40, 41 mit den kopfseitigen Isolationen des Kalorimeters. Die Flanschverbindungen sind jedoch mit dem Bezugszeichen 19 versehen.

Figur 9 zeigt eine zweite Ausführungsform der eingangsseitigen Flanschzone 40. Diese eingangsseitige Flanschzone 40 ist im Wesentlichen gleich ausgebildet wie die Zone gemäss Figur 8. Es ist jedoch zusätzlich ein Vormischer am Ende der Kapillare bzw. des Dosierrohrs 15 des ersten Feedstroms 5 eingebaut. In diesem Beispiel ist der Vormischer ein kleiner statischer Mischer 20 mit einer Mischerhülse 21, die eine Fixierung des Vormischers vor der Impfstelle ermöglicht. Die Mischerhülse 21 ist je nach Ausführungsform aus einem isolierenden, einem weniger isolierenden Metall oder aus einer Keramik gefertigt. Bevorzugt werden sowohl Metalle, wie austenitsche oder feritsche beständige Stähle, als auch Titan, Tantal, Zirkonium und Hastelloy verwendet. Als keramisches Material können beispielsweise Siliziumkarbide, Siliziumnitride oder Aluminiumoxide zu der Anwendung kommen. Die statischen Mischer oder die Hülsen sind je nach Ausführungsform unbeschichtet oder beschichtet.

Die Länge des Vormischers und somit die Anzahl der statischen Mischelemente des in Strömungsrichtung nachfolgenden statischen Mischers sind abhängig von der gewünschten Mischgüte von der Anwendung, bzw. von den Stoffdaten und der Reaktionsgeschwindigkeit.

Ziel des Vormischers ist, die Mischzeit zu verkürzen und damit die Reaktion zu beeinflussen. Man spricht sowohl von einer Makro- als auch von einer Mikromischzeit.

Je nach Ausführungsform reichen erste Messstellen des axialen Mehrfachtemperatursensors 10 in den Vormischer hinein oder sie sind in Strömungsrichtung erst nach dem Vormischer positioniert. In weiteren Ausführungsformen ist eine erste Messstelle des axialen Mehrfachtemperatursensors 10 direkt am Austritt des Feedstroms 5 platziert.

Der Vormischer ist je nach Ausführungsform in der isolierenden Zone 18, als auch im Bereich des Ringspaltes 14, positioniert oder er ist erst nachfolgend angeordnet. Die Anordnung ist beispielsweise, jedoch nicht zwingend oder ausschliesslich, abhängig von der Reaktion und der gewünschten Mischaufgabe bzw. der gewünschten Mischgüte.

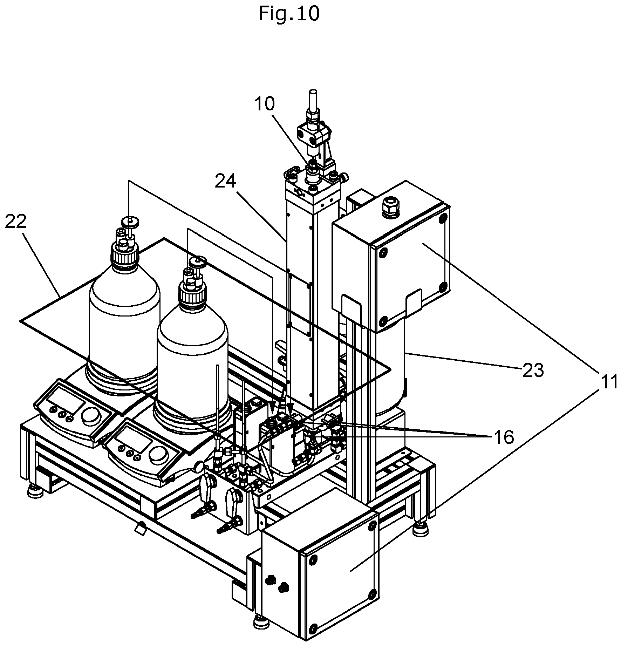

In Figur 10 ist eine Anlage mit dem erfindungsgemässen kontinuierlichen Reaktionskalorimeter gemäss Figur 3 dargestellt. Auch hier ist das Kalorimeter ohne äussere Kopfisolationen der Flanschzonen gezeichnet. Das Bezugszeichen 22 bezieht sich auf den schematisch abgegrenzten Bereich einer Dosiertechnik für die Feedströme 5, 6. Die Dosiertechnik 22 weist einen Magnetrührer, eine Vorlage, eine Pumpe, Ventile, Filter und Durchflussmesser für die Feedströme 5,6 auf. Vorzugsweise ist eine Vorrichtung vorhanden, die ein Vortemperierung der Feedströme 5,6 ermöglicht. Dies ist diesem Beispiel nicht dargestellt.

Im Beispiel gemäss Figur 10 weist das Reaktionskalorimeter 24 am Flanscheintritt vier Stopfen 16 auf. In der Figur sind nur drei dieser Stopfen 16 sichtbar. Hinter dem Reaktor, kaum sichtbar, ist ein Spülbehälter 23, welcher Feedpumpen mit einem Lösungsmittel, bzw. einem Reinigungsmittel versorgt. Die HTM Versorgung befindet hinter dem Reaktionskalorimeter und ist in der Figur nicht sichtbar. Gut sichtbar hingegen ist das Reaktionskalorimeter mit dem axialen Mehrfachtemperatursensor 10 und die kleinen Schaltschränke der intelligenten Mess- und Regeltechnik 11. Das ganze System ist vorzugsweise auf einem Gestell mit einer Wanne aufgebaut. Dies ergibt somit eine kleine kompakte Anlage für Labors, die trotzdem Verhältnisse wie im aufskalierten Reaktionsprozess simulieren kann.

Das erfindungsgemässe kontinuierliche Reaktionskalorimeter ermöglicht eine relativ genaue kalorimetrische Messung, insbesondere der spezifischen Wärmemenge. Die Ergebnisse sind auf grosse Reaktoren skalierbar.

**Bezugszeichenliste**

| 1 | Wärmeisolation | 13 | Wendel |
|---|---|---|---|
| 2 | Ummantelung | 14 | Ringspalt |
| 3 | Rohrzone | 15 | Dosierrohr |
| 3.1, 3.2 | Grenzbereich der Rohrzone | 16, 16.1 | Stopfen |
| 40 | eingangsseitige Flanschzone | 17 | Rohrhülse |
| 41 | ausgangsseitige Flanschzone | 18 | Zone mit innerer Isolierung |
| 5 | erster Feedstrom | 19 | Flanschverbindung |
| 50 | erster Feedstrom-Zulauf | 20 | statischer Mischer des Vormischers |
| 6 | zweiter Feedstrom | | |
| 60 | zweiter Feedstrom-Zulauf | 21 | Mischerhülse |
| 70 | erster Auslauf | 22 | Dosiertechnik |
| 71 | zweiter Auslauf | 23 | Spülbehälter |
| 7 | Auslaufstrom eines Produkts | 24 | Reaktionskalorimeter |

(fortgesetzt)

| | | | |
|---|---|---|---|
| 7.1 | zweite Auslaufstrom | 30 | Doppelmantel-Mischer-Wärmetauscher |
| 8 | HTM Zulauf | | |
| 9 | HTM Auslauf | 31 | Doppelmantelrohr |
| 10 | Axialer Mehrfachtemperatursensor | 32 | Mischrohr |
| | | 33 | statische Mischergeometrie |
| 11 | intelligente Mess- und Regeltechnik | 34 | Längsmittelachse |
| | | 35 | Flansch |
| 12 | schematische Verbindung von Sensoren mit der Mess- und Regeltechnik | 36 | radiale Bohrung |
| | | 37 | Zulauf |
| | | 38 | Auslauf |

**Patentansprüche**

1. Kontinuierliches Reaktionskalorimeter mit einem ersten Feedstrom-Zulauf (50) und einem Auslauf (70) für ein Produkt, einer zwischen dem ersten Zulauf (50) und dem Auslauf (70) angeordneten Rohrzone (3) und mit mehreren entlang der Länge angeordneten Temperaturmessstellen (10), wobei das Reaktionskalorimeter mindestens einen zweiten Feedstrom-Zulauf (60) aufweist,
**dadurch gekennzeichnet,**

   **dass** das Reaktionskalorimeter im Bereich der Rohrzone (3) einen Mischer-Wärmetauscher (30) mit einer statischen Mischergeometrie (33) aufweist,
   **dass** der Mischer-Wärmetauscher (30) einen Innenraum zur Aufnahme der Mischergeometrie (33) aufweist, wobei der Innenraum einen Innendurchmesser (D) von 4 bis 16 mm aufweist, und
   **dass** mindestens fünf Temperaturmessstellen auf einer Länge von 500 mm entlang des Mischer-Wärmetauschers (30) angeordnet sind.

2. Kontinuierliches Reaktionskalorimeter nach Anspruch 1, wobei der Mischer-Wärmetauscher ein Doppelmantel-Mischer-Wärmetauscher ist, vorzugsweise mit einem Ringspalt (14) und noch bevorzugter mit einem Ringspalt (14) mit zusätzlichen innenliegenden Umlenkmitteln, Schaschlikelementen oder Wendeln (13).

3. Kontinuierliches Reaktionskalorimeter nach einem der Ansprüche 1 oder 2, wobei Temperaturmessstellen (10) axial verteilt angeordnet sind und konzentrisch oder versetzt zu einer Längsmittelsachse (34) in der statischen Mischergeometrie (33) angeordnet sind.

4. Kontinuierliches Reaktionskalorimeter nach einem der Ansprüche 1 bis 3, wobei der Gesamtdurchsatzbereich 1 bis 200 ml/min beträgt, wobei der Temperaturbereich - 60 °C bis 250°C beträgt, wobei die Reynolds-Zahl kleiner 400, bevorzugt kleiner 200, besonders bevorzugt kleiner 120 ist und wobei die Bodenstein-Zahl im Reaktionskalorimeter mindestens 20 beträgt.

5. Kontinuierliches Reaktionskalorimeter nach einem der Ansprüche 1 bis 4, wobei das kontinuierliche Reaktionskalorimeter mit einer intelligenten Mess- und Regeltechnik (11) ausgestattet ist.

6. Kontinuierliches Reaktionskalorimeter nach einem der Ansprüche 1 bis 5, wobei das kontinuierliche Reaktionskalorimeter eine stirnseitige eingangsseitige Flanschzone (40) und eine stirnseitige ausgangsseitige Flanschzone (41) aufweist, wobei der erste und der mindesten eine zweite Feedstrom-Zulauf (50,60) in der eingangsseitigen Flanschzone (40) angeordnet sind und wobei diese eingangsseitige Flanschzone (40) thermisch isoliert ist, vorzugsweise innen und/oder aussen.

7. Kontinuierliches Reaktionskalorimeter nach Anspruch 6, wobei der erste und der mindesten eine zweite Feedstrom-Zulauf (50, 60) einen Stopfen (16, 16.1) mit einer Durchgangsöffnung aufweist, wobei der Stopfen (16, 16.1) aus einem isolierenden Material gefertigt ist.

8. Kontinuierliches Reaktionskalorimeter nach einem der Ansprüche 6 oder 7, wobei mindestens die eingangsseitige Flanschzone (40) eine innere Rohrwand ausbildet, die mindestens über einen Teil ihres Umfangs thermisch isoliert ist, vorzugsweise mittels einer thermisch isolierenden Hülse oder Halbschale.

9. Kontinuierliches Reaktionskalorimeter nach einem der Ansprüche 1 bis 8, wobei das Spiel zwischen dem Innendurchmesser (D) und einem Aussendurchmesser der statischem Mischergeometrie (33) < 0.2 mm, bevorzugt < 0.1, besonders bevorzugt < 0.05 mm beträgt.

10. Kontinuierliches Reaktionskalorimeter nach einem der Ansprüche 1 bis 9, wobei die Rohrzone (3) einen wärmeverlustarmen Bereich bildet und wobei der erste Feedstrom-Zulauf (50) bis in diesen Bereich verlängert ist, so dass ein durch den ersten Feedstrom-Zulauf (50) einströmender erster Feedstrom (5) eine chemische Reaktion erst in diesem wärmeverlustarmen Bereich aktiviert.

11. Kontinuierliches Reaktionskalorimeter nach Anspruch 10, wobei in der eingangsseitigen Flanschzone (40) ein HTM Zulauf (8) oder ein HTM Auslauf (9) angeordnet ist und wobei der Feedstrom-Zulauf (50) im Bereich dieses HTM Zulaufs (8) bzw. im Bereich dieses HTM Auslaufs (9) endet.

12. Kontinuierliches Reaktionskalorimeter nach den Ansprüchen 2 und 11, wobei der Feedstrom-Zulauf (50) den ersten Feedstrom (5) mindestens bis zum Bereich des Ringspalts (14) führt, wobei der HTM Zulauf (8) bzw. der HTM Auslauf (9) mit dem Ringspalt (14) verbunden ist.

13. Kontinuierliches Reaktionskalorimeter nach einem der Ansprüche 1 bis 12, wobei das kontinuierliche Reaktionskalorimeter über den ersten und/oder den zweiten Feedstrom-Zulauf (50, 60) spülbar ist.

14. Kontinuierliches Reaktionskalorimeter nach einem der Ansprüche 1 bis 13, wobei der Kanal mit statischen Mischern rechteckig ist.

15. Verfahren zur Berechnung eines Wärmeübergangs in einem kontinuierlichen Reaktionskalorimeter gemäss einem der Ansprüche 1 bis 14, **dadurch gekennzeichnet, dass** entlang der thermisch isolierten Zone (3) innerhalb des Mischer-Wärmetauschers (30) mit der statischen Mischergeometrie (33) an mehreren entlang einer Längsmittelachse (34) verteilt angeordneten Messstellen (10) eine Temperatur gemessen wird und dass alle gemessenen Messpunkte ausgewertet und zur Berechnung eines k-Werts berücksichtigt werden.

**Claims**

1. Continuous reaction calorimeter having a first feed stream inlet (50) and an outlet (70) for a product, a tube zone (3) arranged between the first inlet (50) and the outlet (70), and having multiple temperature measurement points (10) arranged along the length, wherein the reaction calorimeter has at least one second feed stream inlet (60), **characterized**

   **in that** the reaction calorimeter has, in the region of the tube zone (3), a mixer-heat exchanger (30) having a static mixer geometry (33),
   **in that** the mixer-heat exchanger (30) has an interior space for receiving the mixer geometry (33), wherein the interior space has an inner diameter (D) of 4 to 16 mm, and
   **in that** at least five temperature measurement points are arranged on a length of 500 mm along the mixer-heat exchanger (30).

2. Continuous reaction calorimeter according to Claim 1, wherein the mixer-heat exchanger is a jacketed mixer-heat exchanger, preferably having an annular gap (14) and even more preferably having an annular gap (14) with additional internal deflection means, Shashlik elements or coils (13).

3. Continuous reaction calorimeter according to either of Claims 1 and 2, wherein temperature measurement points (10) are arranged in an axially distributed manner and are arranged concentrically or offset with respect to a longitudinal central axis (34) in the static mixer geometry (33).

4. Continuous reaction calorimeter according to one of Claims 1 to 3, wherein the total throughput range is 1 to 200 ml/min, wherein the temperature range is -60°C to 250°C, wherein the Reynolds number is smaller than 400, preferably smaller than 200, particularly preferably smaller than 120, and wherein the Bodenstein number in the reaction calorimeter is at least 20.

5. Continuous reaction calorimeter according to one of Claims 1 to 4, wherein the continuous reaction calorimeter is equipped with intelligent measurement and control technology (11).

6. Continuous reaction calorimeter according to one of Claims 1 to 5, wherein the continuous reaction calorimeter has an end-side input-side flange zone (40) and an end-side output-side flange zone (41), wherein the first and the at least one second feed stream inlet (50, 60) are arranged in the input-side flange zone (40) and wherein this input-side flange zone (40) is thermally insulated, preferably on the inside and/or outside.

7. Continuous reaction calorimeter according to Claim 6, wherein the first and the at least one second feed stream inlet (50, 60) has a plug (16, 16.1) with a passage opening, wherein the plug (16, 16.1) is manufactured from an insulating material.

8. Continuous reaction calorimeter according to either one of Claims 6 and 7, wherein at least the input-side flange zone (40) forms an inner tube wall which is thermally insulated at least over part of its circumference, preferably by means of a thermally insulating sleeve or half-shell.

9. Continuous reaction calorimeter according to one of Claims 1 to 8, wherein the clearance between the inner diameter (D) and an outer diameter of the static mixer geometry (33) is < 0.2 mm, preferably < 0.1, particularly preferably < 0.05 mm.

10. Continuous reaction calorimeter according to one of Claims 1 to 9, wherein the tube zone (3) forms a region with little loss of heat and wherein the first feed stream inlet (50) is extended into this region, such that a first feed stream (5) flowing in through the first feed stream inlet (50) activates a chemical reaction only in this region with little loss of heat.

11. Continuous reaction calorimeter according to Claim 10, wherein a HTM inlet (8) or a HTM outlet (9) is arranged in the input-side flange zone (40) and wherein the feed stream inlet (50) ends in the region of this HTM inlet (8) or in the region of this HTM outlet (9).

12. Continuous reaction calorimeter according to Claims 2 and 11, wherein the feed stream inlet (50) guides the first feed stream (5) at least up to the region of the annular gap (14), wherein the HTM inlet (8) or the HTM outlet (9) is connected to the annular gap (14).

13. Continuous reaction calorimeter according to one of Claims 1 to 12, wherein the continuous reaction calorimeter is able to be flushed via the first and/or the second feed stream inlet (50, 60).

14. Continuous reaction calorimeter according to one of Claims 1 to 13, wherein the channel with static mixers is rectangular.

15. Method for calculating a heat transfer in a continuous reaction calorimeter according to one of Claims 1 to 14, **characterized in that**, along the thermally insulated zone (3) within the mixer-heat exchanger (30) having the static mixer geometry (33), a temperature is measured at multiple measurement points (10) arranged distributed along a longitudinal central axis (34), and **in that** all the measured measurement points are evaluated and taken into account for the calculation of a k-value.

**Revendications**

1. Calorimètre à réaction continue comprenant une première entrée de flux d'alimentation (50) et une sortie (70) destinée à un produit, une zone tubulaire (3) disposée entre la première entrée (50) et la sortie (70) et plusieurs points de mesure de température (10) disposés sur la longueur, le calorimètre à réaction comportant au moins une deuxième entrée de flux d'alimentation (60),
   **caractérisé en ce que**

   le calorimètre à réaction comporte un échangeur de chaleur à mélangeur (30) pourvu d'une géométrie de mélangeur statique (33) au niveau de la zone tubulaire (3),
   l'échangeur de chaleur à mélangeur (30) comporte un espace intérieur destiné à recevoir la géométrie de mélangeur (33), l'espace intérieur ayant un diamètre intérieur (D) de 4 à 16 mm, et
   au moins cinq points de mesure de température sont disposés sur une longueur de 500 mm le long de l'échangeur de chaleur à mélangeur (30).

**2.** Calorimètre à réaction continue selon la revendication 1, l'échangeur de chaleur à mélangeur étant un échangeur de chaleur à mélangeur à double enveloppe, de préférence pourvu d'un espace annulaire (14) et plus préférablement d'un espace annulaire (14) pourvu de moyens de déflexion internes supplémentaires, d'éléments formant brochettes ou de filaments spiralés (13).

**3.** Calorimètre à réaction continue selon l'une des revendications 1 ou 2, des points de mesure de température (10) étant disposés de manière axialement répartie et étant disposés de manière concentrique ou décalée par rapport à un axe central longitudinal (34) dans la géométrie de mélangeur statique (33).

**4.** Calorimètre à réaction continue selon l'une des revendications 1 à 3, la gamme de débit totale étant de 1 à 200 ml/min, la gamme de température étant de -60 °C à 250 °C, le nombre de Reynolds étant inférieur à 400, de préférence inférieur à 200, de manière particulièrement préférée inférieur à 120 et le nombre de Bodenstein dans le calorimètre à réaction étant d'au moins 20.

**5.** Calorimètre à réaction continue selon l'une des revendications 1 à 4, le calorimètre à réaction continue étant équipé d'une technologie de mesure et de régulation intelligente (11).

**6.** Calorimètre à réaction continue selon l'une des revendications 1 à 5, le calorimètre à réaction continue comportant une zone de bride frontale côté avant (40) et une zone de bride frontale côté sortie (41), la première et l'au moins une deuxième entrée de flux d'alimentation (50, 60) étant disposées dans la zone de bride côté entrée (40) et cette zone de bride côté entrée (40) étant isolée thermiquement, de préférence à l'intérieur et/ou à l'extérieur.

**7.** Calorimètre à réaction continue selon la revendication 6, la première et l'au moins une deuxième entrée de flux d'alimentation (50, 60) comportant un bouchon (16, 16.1) pourvu d'une ouverture traversante, le bouchon (16, 16.1) étant fabriqué à partir d'une matière isolante.

**8.** Calorimètre à réaction continue selon l'une des revendications 6 ou 7, au moins la zone de bride côté entrée (40) formant une paroi de tube intérieure qui est isolée thermiquement au moins sur une partie de sa circonférence, de préférence au moyen d'un manchon ou d'une demi-coque thermiquement isolants.

**9.** Calorimètre à réaction continue selon l'une des revendications 1 à 8, le jeu entre le diamètre intérieur (D) et un diamètre extérieur de la géométrie de mélangeur statique (33) étant < 0,2 mm, de préférence < 0,1, de manière particulièrement préférée < 0,05 mm.

**10.** Calorimètre à réaction continue selon l'une des revendications 1 à 9, la zone tubulaire (3) formant une zone à faible perte de chaleur et la première entrée de flux d'alimentation (50) s'étendant jusque dans cette zone, de telle sorte qu'un premier flux d'alimentation (5) qui s'écoule par la première entrée de flux d'alimentation (50) active une réaction chimique uniquement dans cette zone à faible perte de chaleur.

**11.** Calorimètre à réaction continue selon la revendication 10, une entrée HTM (8) ou une sortie HTM (9) étant disposée dans la zone de bride côté entrée (40) et l'entrée de flux d'alimentation (50) se terminant dans la zone de cette entrée HTM (8) ou dans la zone de cette sortie HTM (9).

**12.** Calorimètre à réaction continue selon les revendications 2 et 11, l'entrée du flux d'alimentation (50) conduisant le premier flux d'alimentation (5) au moins jusqu'à la zone de l'espace annulaire (14), l'entrée HTM (8) ou la sortie HTM (9) étant reliée à l'espace annulaire (14).

**13.** Calorimètre à réaction continue selon l'une des revendications 1 à 12, le calorimètre à réaction continue pouvant être rincé par la première et/ou la deuxième entrée de flux d'alimentation (50, 60).

**14.** Calorimètre à réaction continue selon l'une des revendications 1 à 13, le conduit canal pourvu de mélangeurs statiques étant rectangulaire.

**15.** Procédé de calcul d'un transfert thermique dans un calorimètre à réaction continue selon l'une des revendications 1 à 14, **caractérisé en ce qu'**une température est mesurée en plusieurs points de mesure (10), disposés de manière répartie le long d'un axe central longitudinal (34), à l'intérieur de l'échangeur thermique à mélangeur (30) pourvu de la géométrie de mélangeur statique (33) le long de la zone thermiquement isolée (3) et **en ce que** tous les points de mesure mesurés sont évalués et pris en compte pour calculer une valeur k.

Fig. 1

Fig. 2

Fig. 3

Fig. 4

Fig. 5

EP 3 932 531 B1

Fig. 6

Fig.7

Fig.8

EP 3 932 531 B1

Fig.9

25

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2332135 C2
- DD 248872 A1
- DE 4405267 C
- EP 1543304 B1
- EP 2870444 B1
- US 20150139269 A1
- WO 2011066663 A1
- EP 1067352 B1
- WO 2008141472 A1

- EP 3620230 A1
- EP 2796195 B1
- EP 3417935 B1
- EP 2286904 B1
- EP 3081285 B1
- EP 2113732 A1
- CH 702311 B1
- EP 3181221 A1

**In der Beschreibung aufgeführte Nicht-Patentliteratur**

- **K. WANG**. Measuring enthalpy of fast exothermal reaction with micro-reactor-based capillary calorimeter. *AICHE Journal*, 14 December 2009, ISSN 0001-1541, 1045-1052